(19) Europäisches Patentamt
European Patent Office
Office européen des brevets

(11) Veröffentlichungsnummer : **0 319 736 B1**

# (12) EUROPÄISCHE PATENTSCHRIFT

(45) Veröffentlichungstag der Patentschrift :
06.03.91 Patentblatt 91/10

(51) Int. Cl.⁵: **F16B 13/14**

(21) Anmeldenummer : **88118897.3**

(22) Anmeldetag : **12.11.88**

(54) Verfahren zum Befestigen von Ankerstangen in Beton und Verbundmasse.

(30) Priorität : 05.12.87 DE 3741320

(43) Veröffentlichungstag der Anmeldung :
14.06.89 Patentblatt 89/24

(45) Bekanntmachung des Hinweises auf die
Patenterteilung :
06.03.91 Patentblatt 91/10

(84) Benannte Vertragsstaaten :
CH DE FR GB LI NL

(56) Entgegenhaltungen :
EP-A- 0 203 416
DE-B- 2 423 433
US-A- 4 198 793

(73) Patentinhaber : B+BTEC HOLDING AG
Leimackerstrasse 1
CH-3178 Bösingen (CH)

(72) Erfinder : van den Boogaart, Robert Wilhelm
Mezenlaan 4
NL-5130 NW Zaltbommel (NL)

(74) Vertreter : Lempert, Jost, Dr.rer.nat. et al
Patentanwälte Dr. Ing. Hans Lichti Dipl.-Ing.
Heiner Lichti Dipl.-Phys. Dr.rer.nat. Jost
Lempert Durlacher Strasse 31 Postfach
410760
W-7500 Karlsruhe 41 (DE)

## Beschreibung

Die Erfindung betrifft ein Verfahren zum Befestigen von Ankerstangen in Beton, wobei ein hinterschnittenes Bohrloch gesetzt wird, eine Verbundmasse eingebracht und die Ankerstange eingesetzt wird sowie anschließend vor Belastung die Verbundmasse ausgehärtet wird sowie eine Verbundmasse zum Befestigen von Ankerstangen in Beton, insbesondere in einer Verbundmassenpatrone.

Derartige Verfahren bzw. Verbundmassen sind allgemein bekannt, z.B. aus der EP-A-0203416.

Zum nachträglichen Festlegen von Ankerstangen, wie insbesondere Gewindestangen in Beton, Kunststein oder sonstigen Gestein eingebrachten Bohrlöchern sind verschiedene Vorgehensmöglich

keiten bekannt, so das Einbringen rein mechanisch gehaltener Spreizdübel oder dergleichen. Es sind weiterhin sogenannte Verbunddübelungen, bei denen nach Setzen des Bohrloches in dieses eine Verbundmassenpatrone eingebracht wird, die in einem Gehäuse, wie aus Glas, eine aushärtbare Verbundmasse, gegebenenfalls in Form zweier zunächst getrennter Komponenten, die vermischt werden und dann den Aushärtprozeß bedingen, eingebracht werden. Nach Einbringen der Patrone wird die Ankerstange eingebracht, wodurch die Patrone zerstört wird und die Aushärtmöglichkeit der Verbundmasse, gegebenenfalls durch zusätzliches Vermischen zweier Komponenten in Gang gesetzt wird. Nach Aushärten kann die Ankerstange belastet werden. Es wurde schon vorgeschlagen, Bohrlöcher mit Hinterschneidungen zu versehen, wodurch eine bessere Halterung erfolgt.

Der Erfindung liegt die Aufgabe zugrunde eine weitere Verbesserung und Vergrößerung der Tragkräfte und Sicherheiten, insbesondere bei kürzeren Einbindehöhen der Ankerstange im vorzugsweise hinterschnittenen Bereich eines Bohrlochs zu schaffen.

Erfindunsgemäß wird die genannte Aufgabe bei einem Verfahren der eingangs genannten Art dadurch gelöst, daß mindestens in einem hinterschnittenen Einbindebereich der Verbundmasse Metall-, insbesondere Stahlnadeln in Wirrlage eingebracht werden. Durch die Aufnahme von Stahlnadeln in die Verbundmasse wird diese zunächst verstärkt und insbesondere werden zusätzliche Kraftübertragungswege zwischen der Ankerstange und dem das Bohrloch umgebenden Material, wie Beton, Stein oder dergleichen geschaffen. Durch die Wirrlage wird insbesondere erzielt, daß ein hinreichender Anteil von Nadeln derart angeordnet ist, daß sie von der Bohrlochbegrenzung nach innen in Einführrichtung der Ankerstange gerichtet sind, damit insbesondere bei auf die Ankerstangen ausgeübten Zugkräften diesen entgegenwirken. Insbesondere wird die Befestigung dadurch unterstützt, daß die Nadeln in der Regel nicht radial, sondern sektoral angeordnet sind, wodurch insbesondere bei einer Gewindestange diese sich mit den Flanken ihrer Gewindevertiefungen sich zu Bohrloch begrenzendem Wandbereich erstreckenden Nadeln abstützen können. Diese bevorzugte Ausgestaltung wird insbesondere dadurch unterstützt, daß Nadeln mit einer Länge in der Größenordnung des Querschnitts der Ankerstange eingebracht werden, wobei insbesondere Nadeln mit einer dem Durchmesser der Ankerstange entsprechenden Länge eingebracht werden und/oder Nadeln mit einer Länge eingebracht werden, die höchstens der Länge eines eine in das Bohrloch eingebrachte Ankerstange berührenden Kreissektors eines Querschnitts durch das Bohrloch im Bereich der größten Abmessung der Hinterschneidung entspricht. Wie gesagt, hängt die Länge der Nadeln vorzuweise vom Durchmesser des gesetzten Bohrlochs bzw. der einzubringenden Ankerstange ab und liegt demgemäß in der Regel in der Größenordnung zwischen 4 und 25 mm, vorzugsweise im Bereich von 5 bis 8 mm. Die Stärke der Nadeln kann ebenfalls in Abhängigkeit der aufzunehmenden Belastungen gewählt werden und wird in der Regel in einem Bereich von 0,2 bis 1,0, vorzugsweise im Bereich von 0,3 bis 0,8 mm liegen. Während die Nadeln grundsätzlich vor oder nach der Verbundmasse in das Bohrloch eingebracht werden können, sieht eine äußerst bevorzugte Ausgestaltung vor, daß die Stahlnadeln zusammen mit der Verbundmasse eingebracht werden. Demgemäß schlägt die Erfindung weiterhin eine Verbundmasse zum Befestigen von Ankerstangen in Beton, insbesondere in Form einer Verbundmassenpatrone vor, bei der Metall-, insbesondere Stahlnadeln in die Verbundmasse eingelagert sind. In diesem Falle kann zur Bemessung der Länge der Stahlnadeln auch der Druckmesser der Patrone ohne herangezogen werden, so daß die Länge der Stahlnadeln in der Größenordnung des Durchmessers der Patrone liegt und insbesondere die Länge der Stahlnadeln dem Druckmesser der Patrone entspricht.

Insgesamt wird durch den erfindungsgemäßen Einsatz von Stahlnadeln die Masse der härtbaren Verbundstoffe, wie härtbarer Kunststoffe erheblich verstärkt und die Belastbarkeit von Dübeln, Ankerstangen und Armierungen in Beton, Gestein oder dergleichen wesentlich erhöht. Ein besonderer Vorteil der Erfindung liegt darin, daß kürzere Einbindhöhen der Ankerstangen, insbesondere in hinterschnittenen Bereichen bei gleicher oder höherer Belastbarkeit erreicht werden und insbesondere abschließende Verbindungen oder Brücken zwischen Ankerstange und umgebenden Material wie Beton oder Gestein tief im Bohrloch realisiert werden können. Hierdurch werden gegenüber bekannten Verbunddübelsystem erheblich größere Sicherheiten und Tragkräfte erzielt, die insbesondere im Bereich von vornherein gebetonierten Ankern liegen, was in vielen Fällen bei Beton, grundsätzlich aber im Gestein, wie in Tunneln oder dergleichen, eben nicht durchgeführt werden kann. Hierzu bietet die Erfindung eine vollwertige Alternative. Die zulässige Belastbarkeit des Ankers ist insbesondere auch bei kleineren Rissen im Beton gewährleistet, die ansonsten schon immer als problematisch angesehen wurden. Die Erfindung bietet insgesamt eine Kombination der Vorteile von Verbund- und mechanischen Dübeln.

Weitere Vorteile und Merkmale der Erfindung ergeben sich aus den Ansprüchen und der nachfolgenden Beschreibung, in der ein Ausführungsbeispiel der Erfindung unter Bezunahme auf die Zeichnung im einzelnen erläutert ist. Dabei zeigt :

Fig. 1 Einen Längsschnitt durch ein Bohrloch mit einer erfindungsgemäß befestigten Ankerstange; und

Fig. 2 einen Schnitt entsprechend A-A der Figur 1.

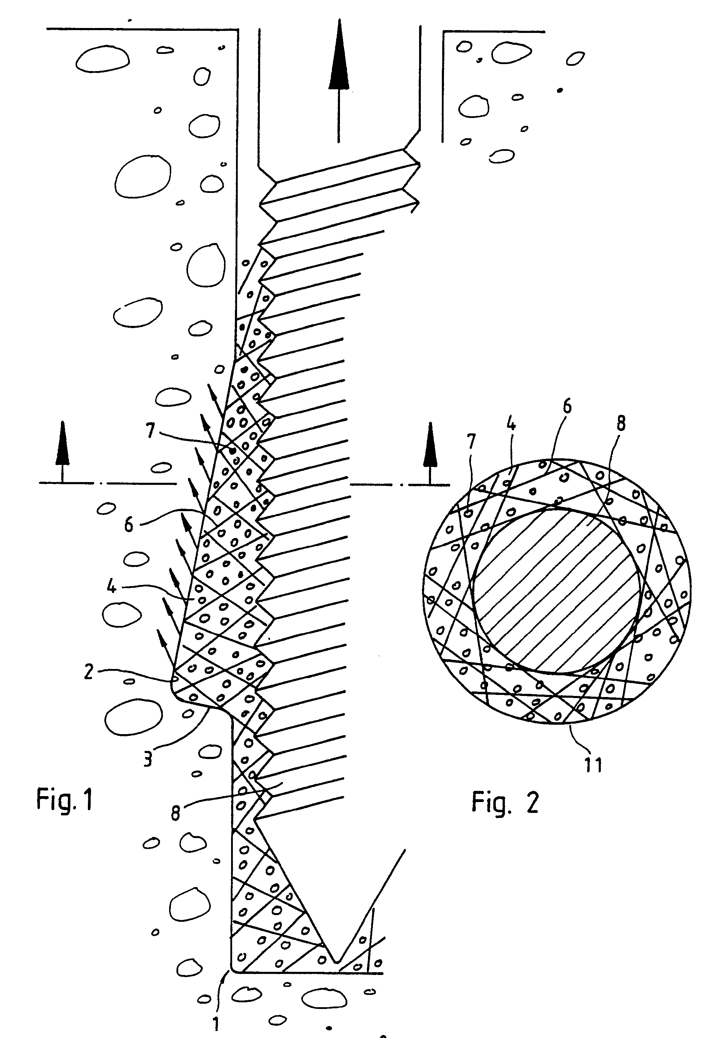

Die Figur 1 zeigt einen Längsschnitt durch ein Bohrloch 1 in Beton, Naturstein oder anderem Gestein, das mit einer Hinterschneidung 2 versehen ist, durch welche eine Schulter 3 gebildet ist, in deren Bereich das Bohrloch 1 und damit auch die Hinterschneidung 2 ihren größten Durchmesser aufweisen. In das Bohrloch 1 wurde eine mit einer Verbundmasse 4 gefüllten Verbunddübelpatrone 1 geführt, die neben der Verbundmasse 4 auch Stahlnadeln 6 enthält. Darüberhinaus kann die Verbundmasse 4 in ansich bekannter Weise auch mit Zuschlagstoffen, wie Quarzkörnern 7 versehen sein. Beim Einführen einer Ankerstange, im dargestellten Ausführungsbeispiel einer Gewindestange 8 in das Bohrloch 1 wird die Verbunddübelpatrone zerstört, so daß die Verbundmasse 3 gesetzt und gegebenenfalls sich mit ihren Komponenten vermischen können, was beispielsweise durch drehen oder schrauben der Ankerstange 8 unterstützt werden kann. Die Stahlnadeln 6 befinden sich schon in der Verbundpatrone in einer gewissen Wirrlage, die beim beschriebenen Eindringen der Ankerstange 8 in das Bohrloch 1 weiter verstärkt wird, so daß sie sich letztendlich, bevor der Verbundmasse 4 Gelegenheit zum Aushärten gegeben wird, in einer beträchtlichen Wirrlage befinden, wie sie den Figuren zu entnehmen ist. Anschließend kann die Verbundmasse in ansich bekannter Veise aushärten. Die Stahlnadeln bedingen eine Kraftübertragung von der Ankerstange 8 zum Material des umgebenden Betons 11, in den das Bohrloch 1 gesetzt wurde, wodurch eine größere Sicherheit und Tragkraft und damit eine Verbesserung der Verankerung erzielt wird.

Die Stärke der Stahlnadeln liegt vorzugsweise im Bereich von 0,3 bis 1 mm. Ihre Länge, in der Regel in der Größenordnung des Durchmessers der Ankerstange 8, wobei in bevorzugter Ausgestaltung vorgesehen ist, daß die Länge der Stahlnadeln etwa der Längeeines die eingesetzte Ankerstange 8 tangierenden Kreissektors 11 entspricht, der einen Kreisabschnitt des Bohrlochs 1 im Bereich der größten Breite der Hinterschneidung 2 abteilt, wie dies in Figur 2 angedeutet ist.

## Ansprüche

1. Verfahren zum Befestigen von Ankerstangen in Beton, wobei ein hinterschnittenes Bohrloch gesetzt wird, eine Verbundmasse eingebracht und die Ankerstange eingesetzt wird sowie anschließend vor Belastung die Verbundmasse ausgehärtet wird, dadurch gekennzeichnet, daß mindestens in einem hinterschnittenen Einbindebereich der Verbundmasse Metall-, insbesondere Stahlnadeln in Wirrlage eingebracht werden.

2. Verfahren nach Anspruch 1, dadurch gekennzeichnet, daß die Stahlnadeln zusammen mit der Verbundmasse eingebracht werden.

3. Verfahren nach Anspruch 1 oder 2, dadurch gekennzeichnet, daß Nadeln mit einer Länge in der Größenordnung des Querschnitts der Ankerstange eingebracht werden.

4. Verfahren nach Anspruch 3, dadurch gekennzeichnet, daß Nadeln mit einer dem Durchmesser der Ankerstange entsprechenden Länge eingebracht werden.

5. Verfahren nach einem der vorangehenden Ansprüche, dadurch gekennzeichnet, daß Nadeln mit einer Länge eingebracht werden, die höchstens der Länge eines eine in das Bohrloch eingebrachte Ankerstange berührenden Kreissektors eines Querschnitts durch das Bohrloch im bereich der größten Abmessung der Hinterschneidung entspricht.

6. Verfahren nach einem der Ansprüche 3 bis 5, dadurch gekennkennzeichnet, daß Nadeln eingebracht werden, die eine Länge zwischen 4 und 25 mm aufweisen.

7. Verfahren nach Anspruch 6, dadurch gekennzeichnet, daß Nadeln eingebracht werden, die eine Länge zwischen 5 und 16 mm aufweisen.

8. Verfahren nach einem der vorangehenden Ansprüche, dadurch gekennzeichnet, daß Nadeln unterschiedlicher Länge, also mit einer Längenverteilung über den entsprechenden Längenbereich, eingebracht werden.

9. Verfahren nach einem der vorangehenden Ansprüche, dadurch gekennzeichnet, daß Nadeln mit einem Durchmesser im Bereich von 0,2 bis 1 mm Stärke eingebracht werden.

10. Verfahren nach Anspruch 9, dadurch gekennzeichnet, daß Nadeln mit einem bevorzugten Durchmesserbereich zwischen 0,3 und 0,8 mm eingebracht werden.

11. Verbundmasse zum Befestigen von Ankerstangen in Beton, insbesondere in einer Verbundmassenpatrone, dadurch gekennzeichnet, daß in ihr Metall-, insbesondere Stahlnadeln (6) eingelagert sind.

12. Verbundmasse nach Anspruch 11, dadurch gekennzeichnet, daß die Länge der Stahlnadeln (6) in der Größenordnung des Durchmessers der Patrone liegt.

13. Verbundmasse nach Anspruch 12, dadurch gekennzeichnet, daß die Länge der Stahlnadeln (6) dem Durchmesser der Patrone entspricht.

14. Verbundmasse nach einem der Ansprüche 11 bis 13, dadurch gekennzeichnet, daß die Länge der Stahlnadeln höchstens einem einen in das Bohrloch (1) eingebrachten Anker (8) berührenden Kreissektor (11) eines Querschnitts des Bohrlochs (1) im Bereich der größten radialen Ausdehnung einer Hinterschneidung des Bohrlochs in einer Hinterschneidung (2) des Bohrlochs (1) entspricht.

15. Verbundmasse nach einem der Ansprüche 11 bis 14, dadurch gekennzeichnet, daß die Länge der Stahlnadel zwischen 4 und 25 mm liegt.

16. Verbundmasse nach Anspruch 15, dadurch gekennzeichnet, daß die Länge der Stahlnadel zwischen 5 und 16 mm liegt.

17. Verbundmasse nach einem der Ansprüche 11 bis 16, dadurch gekennzeichnet, daß die Nadeln (6) unterschiedliche Länge, also mit einer Längenverteilung über einen vorgeebenen Nadellängenbereich, enthält.

18. Verbundmasse nach einem der Ansprüche 11 bis 17, dadurch gekennzeichnet, daß der Durchmesser der Stahlnadel im Bereich zwischen 0,2 und 1 mm liegt.

19. Verbundmasse nach Anspruch 18, dadurch gekennzeichnet, daß der Durchmesser der Stahlnadel vorzugsweise im Bereich zwischen 0,3 und 0,8 mm liegt.

## Revendications

1. Méthode de fixation de boulons d'ancrage dans du béton, avec réalisation d'un perçage contre-dépouillé, introduction d'une masse composite et pose du boulon d'ancrage, la masse composite étant ensuite durcie avant l'application de la charge, **caractérisée en ce** que des aiguilles de métal, en particulier des aiguilles d'acier, sont introduites de manière emmêlée dans au moins une section d'encastrement à contre-dépouille de la masse composite.

2. Méthode selon la revendication 1, caractérisée en ce que les aiguilles d'acier sont introduites conjointement avec la masse composite.

3. Méthode selon l'une des revendications 1 ou 2, caractérisée en ce que les aiguilles introduites présentent une longueur qui est de l'ordre de la section transversale du boulon d'ancrage.

4. Méthode selon la revendication 3, caractérisée en ce que les aiguilles introduites présentent une longueur qui correspond au diamètre du boulon d'ancrage.

5. Méthode selon l'une des revendications précédentes, caractérisée en ce que les aiguilles introduites présentent une longueur qui correspond au plus à la longueur d'un secteur de cercle d'une section transversale du perçage dans la région de la dimension maximale de la contre-dépouille, qui tangente un boulon d'ancrage introduit dans le perçage.

6. Méthode selon l'une des revendications 3 à 5, caractérisée en ce qui les aiguilles introduites présentent une longueur comprise entre 4 et 25 mm.

7. Méthode selon la revendication 6, caractérisée en ce que les aiguilles introduites présentent une longueur comprise entre 5 et 16 mm.

8. Méthode selon l'une des revendications précédentes, caractérisée en ce que les aiguilles introduites présentent des longueurs variables, c'est-à-dire avec une répartition des longueurs sur la plage de longueurs correspondante.

9. Méthode selon l'une des revendications précédentes, caractérisée en ce que les aiguilles introduites présentent un diamètre situé dans la plage de 0,2 à 1 mm.

10. Méthode selon la revendication 9, caractérisée en ce que les aiguilles introduites présentent un diamètre qui se situe de préférence dans la plage de 0,3 à 0,8 mm.

11. Masse composite pour la fixation de boulons d'ancrage dans du béton, en particulier contenue dans une cartouche de masse composite, caractérisée en ce qu'elle contient des aiguilles de métal, et notamment des aiguilles d'acier (6).

12. Masse composite selon la revendication 11, caractérisée en ce que la longueur des aiguilles d'acier (6) est de l'ordre du diamètre de la cartouche.

13. Masse composite selon la revendication 12, caractérisée en ce que la longueur des aiguilles d'acier (6) correspond au diamètre de la cartouche.

14. Masse composite selon l'une des revendications 11 à 13, caractérisée en ce que la longueur des aiguilles d'acier correspond au plus à un secteur de cercle (11) d'une section transversale du perçage (1) dans la région de l'extension radiale maximale d'une contre-dépouille du perçage, dans une contre-dépouille (2) du perçage (1), qui tangente un boulon d'ancrage (8) engagé dans le perçage (1).

15. Masse composite selon l'une des revendications 11 à 14, caractérisée en ce que la longueur de l'aiguille d'acier se situe entre 4 et 25 mm.

16. Masse composite selon la revendication 15, caractérisée en ce que la longueur de l'aiguille d'acier se situe entre 5 et 16 mm.

17. Masse composite selon l'une des revendications 11 à 16, caractérisée en ce qu'elle contient des aiguilles (6) de longueurs variables, c'est-à-dire avec une répartition des longueurs sur une plage de longueurs d'aiguilles prédéterminée.

18. Masse composite selon l'une des revendications 11 à 17, caractérisée en ce que le diamètre de l'aiguille d'acier se situe dans la plage de 0,2 à 1 mm.

19. Masse composite selon la revendication 18, caractérisée en ce que le diamètre de l'aiguille d'acier se situe de préférence dans la plage de 0,3 à 0,8 mm.

**Claims**

1. Method for fixing anchor bolts in concrete, in which an undercut borehole is made, a composite material is introduced and the anchor bolt inserted and, prior to loading, the composite material is completely hardened, characterized in that metal and in particular steel pins are introduced in an irregular arrangement at least into an undercut binding area of the composite material.

2. Method according to claim 1, characterized in that the steel pins are introduced together with the composite material.

3. Method according to claims 1 or 2, characterized in that pins with a length roughly corresponding to the cross-section of the anchor bolt are introduced.

4. Method according to claim 3, characterized in that pins with a length corresponding to the diameter of the anchor bolt are introduced.

5. Method according to one of the preceding claims, characterized in that pins are introduced having a length which is at the most the length of a circular sector of a cross-section contacting an anchor bolt introduced in the borehole through the latter in the vicinity of the largest undercut dimension.

6. Method according to one of the claims 3 to 5, characterized in that pins are introduced having a length between 4 and 25 mm.

7. Method according to claim 6, characterized in that pins with a length between 5 and 16 mm are introduced.

8. Method according to one of the preceding claims, characterized in that pins of different length, i.e. with a length distribution over the corresponding length range are introduced.

9. Method according to one of the preceding claims, characterized in that pins with a diameter in the thickness range 0.2 to 1 mm are introduced.

10. Method according to claim 9, characterized in that pins with a preferred diameter range of 0.3 to 0.8 mm are introduced.

11. Composite material for fixing anchor bolts in concrete, particularly in a composite material cartridge, characterized in that metal and in particular steel pins (6) are installed therein.

12. Composite material according to claim 11, characterized in that the length of the steel pins (6) is approximately the same as the cartridge diameter.

13. Composite material according to claim 12, characterized in that the length of the steel pins (6) corresponds to the cartridge diameter.

14. Composite material according to one of the claims 11 to 13, characterized in that the length of the steel pins at the most corresponds to a circular sector (11) of a cross-section of the borehole (1) contacting a bolt (8) inserted in the latter in the vicinity of the largest radial extension of an undercut (2) of the borehole (1).

15. Composite material according to one of the claims 11 to 14, characterized in that the steel pins are between 4 and 25 mm long.

16. Composite material according to claim 15, characterized in that the steel pins are between 5 and 16 mm long.

17. Composite material according to one of the claims 11 to 16, characterized in that the pins (6) have a differing length, i.e. a length distribution over a given pin length range.

18. Composite material according to one of the claims 11 to 17, characterized in that the steel pin diameter is in the range 0.2 to 1 mm.

19. Composite material according to claim 18, characterized in that the steel pin diameter is preferably in the range 0.3 to 0.8 mm.

Fig. 1

Fig. 2